# EUROPÄISCHE PATENTSCHRIFT

(11) **EP 1 439 011 B1**
(45) Veröffentlichungstag und Bekanntmachung des Hinweises auf die Patenterteilung: **08.10.2008**
(21) Anmeldenummer: 04006083.2
(22) Anmeldetag: 30.08.2000
(51) Int. Cl.: B07B 4/04, A23N 15/10

(54) **Schalenseparator**
Separator for hulls
Séparateur de peaux

(43) Veröffentlichungstag der Anmeldung: 21.07.2004
(62) Teilanmeldung aus: 00952834.0
(73) Patentinhaber: Bühler AG, 9240 Uzwil (CH)
(72) Erfinder: Heeb, Christian, Minnetonka MN 55345 (US); Keller, Urs V., Plymouth MN 55447 (US)
(74) Vertreter: Frommhold, Joachim

(56) Entgegenhaltungen:
- US-A- 1 923 200
- US-A- 3 441 131
- US-A- 3 448 856

## Beschreibung

Die Erfindung betrifft einen Schalenseparator zum Schälen und Abtrennen der Schalen von Soja oder anderen bohnenartigen Früchten, der einem Schrotwalzwerk nachgeordnet ist.

Die Heissschälung von Soja oder anderen bohnenartigen Früchten, zum Beispiel in Vorbereitung einer nachfolgenden Vermahlung ist allgemein bekannt. So beschreibt die DE-C-3544387 ein derartiges Schälverfahren, bei dem die Früchte bis in den Kern auf eine bestimmte Temperatur durchwärmt, anschliessend einem heissen Gasstrom ausgesetzt werden und dann eine Abtrennung der Schalen erfolgt. Das Durchwärmen auf 50°C bis 75°C erfolgt wenigstens teilweise mittels Kontaktwärme. Im Gasstrom wird die Temperatur auf bis zu 90°C erhöht.

Der Kontaktwärme werden die Früchte in einer Vorrichtung mit heissen Flächen ausgesetzt, dem heissen Gasstrom hingegen in einem Fliess- bzw. Wirbelbett. Die Schälvorrichtung ist zum Beispiel ein Prallschäler, dem ein weiteres Fliessbett und/oder ein Windsichter zur Schalenabtrennung nachgeschaltet sein kann. Vor einer Vermahlung erfolgt ein konditionieren.

Bei einer bekannten, zweistufigen Vermahlung folgt auf eine Schrotstufe mit einem Paar Riffelwalzen, gefolgt von einem Paar Gummiwalzen ein Auflöser und auf diesen folgt eine zweite Schrotstufe mit zwei Paar Riffelwalzen.

Der Erfindung liegt nun die Aufgabe zugrunde, eine Vorrichtung zum Schälen von Soja oder anderen bohnenartigen Früchte insbesondere Heissschälen und Abtrennen der Schalen zu schaffen.

Die Erfindung wird nachfolgend in einem Ausführungsbeispiel an Hand einer Zeichnung näher beschrieben. In der Zeichnung zeigen die
- Fig. 1:: ein Verfahrens-Diagramm einer Anlage zur Heissschälung und Vermahlung von Soja o. dgl.

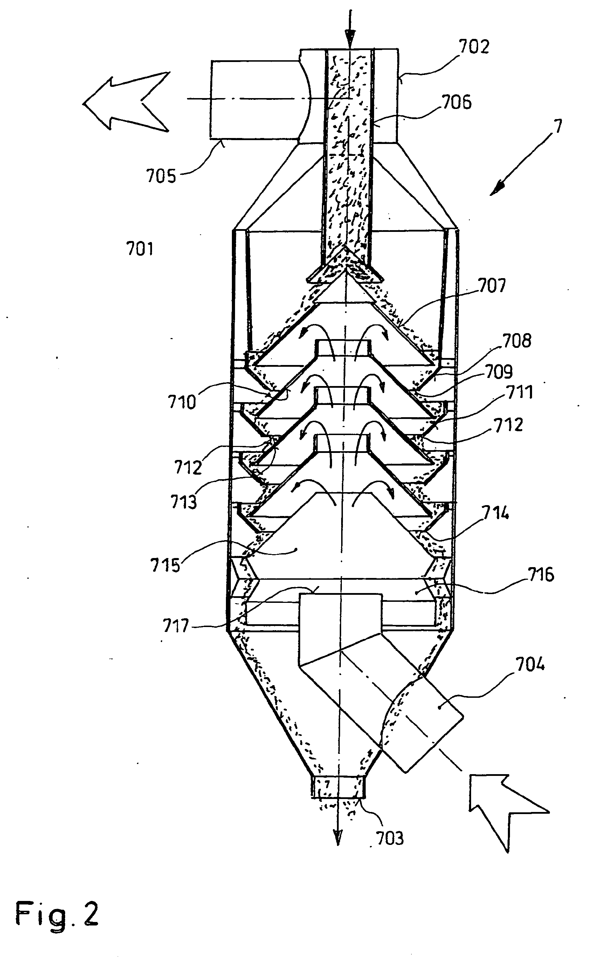

- Fig. 2:: einen Querschnitt eines Schalenseparators.

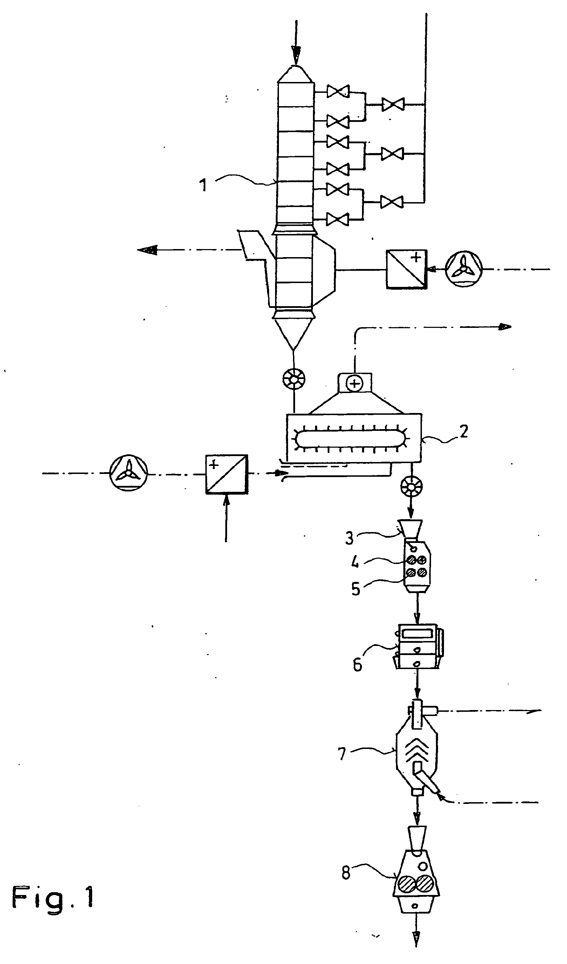

Im nachfolgenden Ausführungsbeispiel sollen nur die wesentlichen Verfahrens- und Anlagenteile näher beschrieben werden. Weitere, zugehörige Verfahrensschritte und Anlagenteile ergeben sich in naheliegender Weise an Hand des bekannten Standes der Technik aus der Fig. 1.

Ganze Sojabohnen gelangen zwecks Konditionierung in einen Dämpfapparat 1 und anschliessend in ein Fliessbett bzw. Wirbelbett 2, wie es zum Beispiel in der DE-C-3544387 beschrieben ist. Im Dämpfapparat 1 erfolgt eine Aufheizung der Sojabohnen mittels Kontaktwärme und im Wirbelbett 2 eine weitergehende Aufheizung im heissen Gasstrom auf eine Durchschnittstemperatur von 70°C bis 90°C. Am Ende der Aufheizung weisen die Bohnen eine Feuchtigkeit von 10-11 % auf. Bereits gelöste Schalen werden sowohl im Dämpfapparat 1 als auch im Wirbelbett 2 in bekannter Weise von den Bohnen separiert.

Die so vorbereiteten Bohnen gelangen nun in einen nicht dargestellten Warmhaltebehälter (Zwischendepot) oder direkt in einen Schrotwalzenstuhl 3. Dieser Schrotwalzenstuhl 3 enthält zwei direkt übereinander angeordnete Walzenpaare 4, 5, welche eine Doppelmahlstufe bilden, wie sie zum Beispiel in der EP-C-335925 beschrieben ist. Die Walzenpaare 4, 5 weisen Riffelwalzen auf.

Die geschroteten Bohnen gelangen anschliessend in einen Prallauflöser 6 und danach in einen Schalenseparator 7, wo die Schalen vollständig von den gebrochenen Bohnen getrennt werden. Die separierten Schalen können noch einer weiteren Sichtung im Luftstrom unterzogen werden. Abschliessend erfolgt dann ein Flockieren in einem Flockierwalzwerk 8 oder eine weitergehende Vermahlung.

Das Verfahren ermöglicht es, ein proteinreiches Mehl (47% bis 48%, in Abhängigkeit vom Proteingehalt in den Bohnen) herzustellen.

Der Schalenseparator 7 besteht aus einem weitgehend zylindrischen Gehäuse 701 mit einem oberen Guteinlass 702 und einem unteren Gutauslass 703 sowie einem unteren Gaseinlass 704 und einem oberen Gasauslass 705, um die gebrochenen Bohnen im Gegenstrom zu durchströmen. Dabei werden die Bohnen nicht nur aspiriert, sondern es werden alle losen Schalen im Gasstrom mit entfernt.

Der Guteinlass 702 enthält ein Schüttrohr 706, durch welches die Bohnen (und Schalen) auf ein erstes, konzentrisch zum Schüttrohr 706 angeordnetes kegelförmiges Prallelement 707 kreisringförmig aufschlagen. Durch den in entgegensetzter Richtung strömenden Gasstrom werden lose Schalen und leichte Partikel mitgenommen. Die Bohnenteile hingegen rollen auf der Kegelfläche des Prallelementes 707 herab und fallen in eine darunter befindliche Trimelle 708. In den offenen Boden 709 der Trimelle 708 ragt ein weiteres, darunter befindliches, kegelförmiges Prallelement 710. Durch Schwerkraftwirkung rollen die Bohnen- und Schalenteile von der Trimelle 708 auf die Kegelfläche des zweiten Prallelementes 710 und von da in eine weitere, unter diesem befindliche Trimelle 711. Dabei können weitere Schalenteile mit dem Gastrom abgetrennt werden.

Unterhalb dieser Trimelle 711 ragt ein weiteres solches Prallelement 713 in den Boden 712 der zweiten Trimelle 711. Analog folgen ein drittes und viertes Prallelement. Das vierte Prallelement 713 weist eine analoge Trimelle mit einem offenen Boden 714 auf. In diesen Boden 714 ragt in vorbeschriebener Weise ein fünftes kegelförmiges Prallelement 715. Dieses weist unterhalb der Kegelfläche eine zylindrische Mantelfläche 716 auf, so dass dieses Prallelement 715 die konzentrisch angeordnete Öffnung 717 des Gaseinlasses 704 abdeckt.

Nur das Prallelement 707 weist eine geschlossene, kegelförmige Prallfläche auf, hingegen sind die Spitzen der übrigen Prallelemente oben offen, um ein durchströmen des Gases in Richtung Trimelle und darüberliegendes Prallelement zu ermöglichen.

Die keglige Öffnung des Schüttrohres 706 oder Teile des Schüttrohres 706 können zum Prallelement 707 höhenverstellbar sein (bzw. auch das Prallelement), um den Zufluss der Bohnen bei Bedarf zu regulieren.

Durch diese kaskadenförmige Prallung wird eine sehr gute Aspiration des Bohnengutes und eine effiziente Separation der Schalen erreicht. Es sollten mindestens zwei oder drei Prallelemente vorgesehen werden.

### Bezugszeichen

- 1: Dämpfapparat
- 2: Wirbelbett
- 3: Schrotwalzwerk
- 4: Walzenpaar
- 5: Walzenpaar
- 6: Prallauflöser
- 7: Schalenseparator
- 8: Flockierwalzwerk

- 701: Gehäuse
- 702: Guteinlass
- 703: Gutauslass
- 704: Gaseinlass
- 705: Gasauslass
- 706: Schüttrohr
- 707: Prallelement
- 708: Trimelle
- 709: Boden
- 710: Prallelement
- 711: Trimelle
- 712: Boden
- 713: Prallelement
- 714: Boden
- 715: Prallelement
- 716: Mantelfläche
- 717: Öffnung

## Patentansprüche

1. Schalenseparator mit einem im wesentlichen zylindrischen Gehäuse (701) mit einem oberen Guteinlass (702), welcher in ein Schüttrohr (706) übergeht, einem unteren Gutauslass (703), einem unteren Gaseinlass (704), einem oberen Gasauslass (705) und mehreren, konzentrisch zur Mittelachse des Gehäuses (701) und kaskadenförmig übereinander angeordneten Prallelementen (707,..., 715), die kegelförmige Prallflächen aufweisen, welche das durch das Schüttrohr (706) einlaufende Gut in Richtung der Innenwandung des Gehäuses (701) verteilen, wobei zwischen jeweils zwei Prallelementen (707,..., 715) eine Trimelle (708,...) zum Umlenken des Gutstroms auf die Prallfläche des darunter befindlichen Prallelementes (710,..., 715) vorgesehen ist und dass das jeweils untere Prallelement (710,...) in einen offenen Boden (709) der Trimelle (708,...) hineinragt, und dass weiterhin eine Öffnung (717) des Gaseinlasses (704) unterhalb des untersten Prallelementes (715), konzentrisch zur Mittelachse des Gehäuses (701) angeordnet ist und weiterhin das obere, erste Prallelement (707) eine geschlossene kegelförmige Prallfläche aufweist, die Prallflächen der übrigen Prallelemente hingegen an der Kegelspitze offen sind.

2. Schalenseparator nach Anspruch 1 **dadurch gekennzeichnet, dass** mindestens zwei, bevorzugt vier oder fünf Prallelemente (707,...) vorgesehen sind.

3. Anordnung eines Schalenseparators nach Anspruch 1 oder 2 in einer Anlage zur Heissschälung und Vermahlung von Soja, umfassend ein, dem Schalenseparator (7) nachgeordnetes Flockierwalzwerk (8) oder ein nachgeordnete Feinvermahlung.

4. Anordnung nach Anspruch 3, **dadurch gekennzeichnet, dass** dem Schalenseparator (7) ein Schrotwalzwerk (3) mit zwei direkt übereinander angeordneten Walzenpaaren (4, 5) mit Riffelwalzen vorgelagert angeordnet ist.

## Claims

1. A husk separator with an essentially cylindrical casing (701) with an upper material inlet (702), which passes into a discharge pipe (706), a lower material outlet (703), a lower gas inlet (704), an upper gas outlet (705) and several impact elements (707, ..., 715) arranged concentrically relative to the middle axis of the casing (701) and cascaded one atop the other, which have conical impact surfaces that distribute the material entering through the discharge pipe (706) in the direction of the inner wall of the casing (701), wherein a Trimelle hopper (708, ...) is provided between a respective two impact elements (707, ..., 715) to deflect the material stream toward the impact surface of the underlying impact element (710, ..., 715), and the respective lower impact element (710, ...) projects into an open floor (709) of the Trimelle hopper (708, ...), and that an opening (717) in the gas inlet (704) under the lowermost impact element (715) is further concentrically arranged relative to the middle axis of the casing (701), and also that the upper, first impact element (707) exhibits a closed, conical impact surface, while the impact surfaces of the remaining impact elements are open at the conical tip.

2. The husk separator according to claim 1, **characterized in that** at least two, preferably four or five impact elements (707, ...) are provided.

3. An arrangement of a husk separator according to claim 1 or 2 in a system for hot-husking and milling soy, comprising a flocculating rolling mill (8) downstream from the husk separator (7) or a downstream fine milling device.

4. The arrangement according to claim 3, **characterized in that** a scrap rolling mill (3) with two roll pairs (4, 5) with corrugated rolls situated directly one atop the other are arranged upstream from the husk separator (7).

## Revendications

1. Séparateur de coques comportant un boîtier sensiblement cylindrique (701) doté d'une entrée de produit supérieure (702) qui transite dans un tuyau de déversement (706), d'une sortie de produit inférieure (703), d'une entrée de gaz inférieure (704), d'une sortie de gaz supérieure (705) et de plusieurs éléments d'impact (707, ..., 715) superposés concentriquement par rapport à l'axe médian du boîtier (701) et en cascade qui comprennent des surfaces d'impact de forme conique qui répartissent le produit arrivant par le tuyau de déversement (706) en direction de la paroi interne du boîtier (701), étant prévu respectivement entre deux éléments d'impact (707, ..., 715) un couloir (708, ...) destiné à dévier le flux de produit vers la surface d'impact de l'élément d'impact sous-jacent (710, ..., 715) et que l'élément d'impact respectivement inférieur (710, ...) rentre dans un fond ouvert (709) du couloir (708, ...) et qu'en outre une ouverture (717) de l'entrée de gaz (704) est disposée en dessous de l'élément d'impact (715) placé le plus bas, concentriquement par rapport à l'axe médian du boîtier (701), et qu'en outre le premier élément d'impact supérieur (707) comporte une surface d'impact fermée de forme conique mais que les surfaces d'impact des autres éléments d'impact sont par contre ouvertes à la pointe du cône.

2. Séparateur de coques selon la revendication 1, **caractérisé en ce qu'**il est prévu au moins deux, de préférence quatre ou cinq éléments d'impact (707, ...).

3. Disposition d'un séparateur de coques selon la revendication 1 ou 2 dans une installation de décorticage à chaud et de broyage de soja, comprenant un laminoir de floconnage (8) placé en aval du séparateur de coques (7) ou un dispositif de broyage fin placé en aval.

4. Disposition selon la revendication 3, **caractérisée en ce qu'**en amont du séparateur de coques (7) est disposé un laminoir de mouture (3) comportant deux paires de rouleaux (4, 5) directement superposées et dotées de rouleaux égreneurs.
